# EUROPEAN PATENT SPECIFICATION

(11) **EP 0 759 104 B1**
(45) Date of publication and mention of the grant of the patent: **22.09.1999**
(21) Application number: 95917998.7
(22) Date of filing: 09.05.1995
(51) Int. Cl.: D21B 1/32, D21B 1/34

(54) **METHOD FOR DEFIBERING RECYCLED PAPER**
VERFAHREN ZUM ZERFASERN VON ALTPAPIER
PROCEDE DE DEFIBRAGE DE PAPIER RECYCLE

(30) Priority: 13.05.1994 FI 942256
(43) Date of publication of application: 26.02.1997
(73) Proprietor: VALMET CORPORATION, 00620 Helsinki (FI)
(72) Inventor: HAUTALA, Jouko, FIN-33400 Tampere (FI)
(74) Representative: Holmström, Stefan Mikael
(86) International application number: FI9500245
(87) International publication number: WO9531597

(56) References cited:
- CH-A- 606 600
- DE-A- 2 711 159
- GB-A- 1 460 178
- US-A- 4 387 856

## Description

The invention relates to a method for processing recycled paper to a pulp to be reused, in which method the recycled paper is defibered into a pulp in a pulper, contaminants are removed from the pulp, and the pulp is coarse-screened and fine-screened.

Different kinds of waste paper are collected and reused as recycled paper for producing both different types of paper and paperboard. The quality of recycled paper varies considerably, and the paper may consist of both pure paper and paper filled with different fillers and coated with plastic or other substances. Also, when recycled paper is collected, different kinds of plastic, string, metal, sand etc. come with the paper and must be removed during the processing.

Typically, recycled paper is first decomposed, i.e. defibered, in a pulper or some other corresponding device where a pulp mixture with all its contaminants is formed. After that, there is a primary cleaning stage in a so-called HC-cleaner, where contaminants, such as metal, sand etc., that are heavier than the paper fibre are removed from the mixture. After this, the pulp mixture is coarse-screened, whereby non-degradable paper and bigger pieces of reject are separated, and the decomposed fibres and smaller pieces of reject move forward. The separated pulp, i.e. reject, is sorted further either once or twice, and the fibre material which has passed the last stage of the coarse screening, and the dilution water are usually returned back in front of the coarse screen. After this, the pulp is diluted, and fine sand and other contaminants are removed from it in a separate so-called LC-cleaner. The LC-cleaner is typically a low-consistency cleaner comprising 5 or 6 steps where a pulp mixture of less than 1 percent is typically cleaned. By removing the sand, it is possible to prevent the wearing of the sorting surface of the next stage, i.e. the fine screening. The pulp which has been LC-cleaned is usually cleaned in a three-stage fine screening, where the fibre material of the last stage and the dilution water are returned in front of the fine screening or the previous step for recleaning. In the different stages of the fine screening, the fibre material can be simultaneously fractioned into so-called short fibre and long fibre. The rejects of the coarse and fine screening are usually passed to a separate reject processing. The fractioned pulps, in turn, are thickened and taken after that, via the storage chests, to use, whereas the water filtered from them is returned back to the process as a dilution liquid.

The disadvantage of the prior art is that the equipment required for realizing the process is quite large and comprises several device units, which must be made to function together in a suitable way. As a result, both the investment costs and costs of operation of the equipment are quite high, and furthermore, the equipment requires a lot of space.

The purpose of the present invention is to provide a method by means of which recycled paper can be processed to a pulp mixture to be reused in a considerably simpler and less costly way than in the known solutions. According to the invention, the recycled paper is defibered and coarse-screened in a pulper comprising a fixed sorter part where coarse contaminants and non-degradable fibre bundles are separated from the pulp so that a coarse-screened pulp can be obtained from the pulpering, and that the pulp which has passed the sorting is taken after this without any further coarse screening step to LC-cleaning where sand is removed from it, and after that the pulp is taken to fine screening where the rest of the contaminants are removed from it.

The essential idea of the invention is that the defibering and coarse screening of the recycled paper is performed in one single device simultaneously, whereby the high-consistency cleaner and separate coarse screens used in the previous methods are not needed. Another essential idea of the invention is that the resultant pulp is taken directly to LC-cleaning where mostly sand is removed from the pulp, and after this to fine screening where the rest of the reject is removed. Since in this case sand is the only thing to be removed in the LC-cleaning, the cleaning can be performed with a considerably simpler cleaner than previously, i.e. with a cleaner comprising 2 or 3, and not 5 or 6, steps. Thus the number of the devices needed for the process can be reduced in a simple manner, while the energy consumption of the removed units can be mostly eliminated.

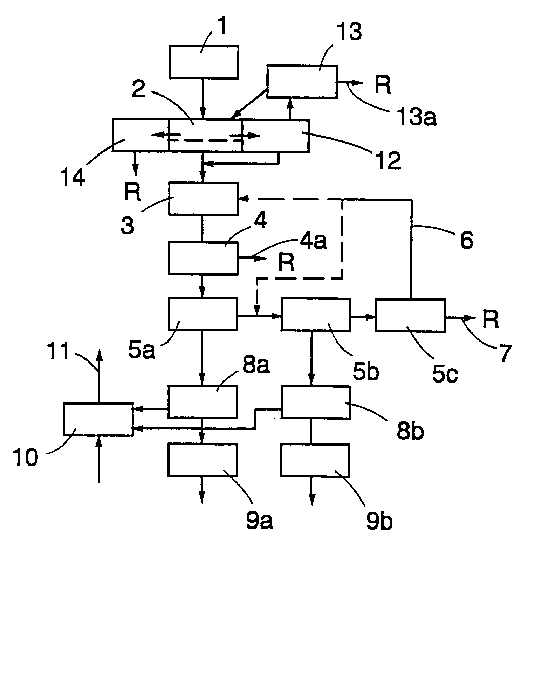

The invention will be described in greater detail in the accompanying drawing, which shows schematically the method according to the invention.

The figure shows a conveyor 1, which brings the recycled paper to a pulper 2. In the pulper 2, the conveyed recycled paper is defibered in water, whereby the fibres can be separated from each other. The pulper is most preferably identical to that disclosed in U.S. Patent 5,064,125, thus comprising, on the same axis and operated by the same engine, both a pulper and a coarse screen part situated beneath the pulper tank. The pulp comes out of the pulper 2 coarse-screened, and the accepted mass fraction is conveyed to an intermediate tank 3, and the rejected pulp fraction is removed as reject. From the intermediate tank 3, the pulp is passed forward to an LC-cleaner 4, where mostly sand is removed from the pulp to a reject conduit 4a. The pulp is taken, in turn, forward to fine screening, where the pulp is separated, if necessary, into fractions containing different kinds of fibres by means of screen surfaces provided with perforations or apertures of different sizes, and at the same time the rest of the contaminants which have still remained in the pulp after the coarse screening and the LC-cleaning are removed from the pulp. Most preferably, a multi-stage sorter according to Finnish Patent Application 931,993 is used for the fine screening, whereupon it is possible to sort short fibre and long fibre into separate groups, if necessary, by means of the different sorting stages 5a to 5c, and the fibres sorted from the reject are returned via a return conduit 6 to the previous sorting stage or to the intermediate tank 3, and the final reject is removed via the reject conduit 7. The short fibre and long fibre are taken, still separated from each other, to thickeners 8a and 8b, from where they are taken further to storage chests 9a and 9b, and from there to be used. The fine screening may also be done in such a way that the pulp is not fractioned, but only the contaminants are removed from it and the pulp obtained in the sorting is thickened as such. The water separated during the thickening is returned to a filtrate water tank 10, where the substitution water of the water removed with the pulp is also fed. From the filtrate water tank 10, the water is taken via a conduit 11 for dilution in different stages of the process.

The reject mass coming from the pulper 2 is defibered again and sorted in a secondary pulper 12, from where the sorted/accepted pulp is taken to the intermediate tank 3 with the rest of the pulp. The reject from the secondary pulper is taken further to a reject drum 13 where most of the dilution water coming from the conduit 11 is fed. In the reject drum, loose fibre is separated from the reject with dilution water, the loose fibre being then taken to the pulper 2 for the defibering of the recycled material arriving there, and the reject material remaining in the reject drum is taken for further processing via a reject conduit 13a. The pulper 2 also comprises in a normal manner a refuse chute 14, where stones and other heavy material are separated and from where they are separately removed.

In the arrangement according to the invention, the pulpering and coarse screening of the recycled paper in the pulper 2 and the processing of the reject resulting from these stages can be achieved quite efficiently, whereby the separate coarse screens required in the known arrangements and other devices related thereto are not needed. Furthermore, when a pressure screen of most preferably three stages is used in the fine screening and/or fractioning stage, energy is saved and investment costs are also considerably reduced as compared with the known arrangements, since due to the uniform equipment structure there is no need for a large number of separate pipelines and other material. Therefore, by means of the method according to the invention it is possible to save about 30 to 40% of the energy consumption in the normal processing of recycled paper, at the same time as the investment costs of the equipment are considerably reduced. Furthermore, by means of the arrangement according to the invention, it is possible to LC-clean the sand from the pulp arriving coarse-screened from the pulper 2 in an effective manner even in the consistency of 2%, at the same time as increasing the consistency from the value of 1% typically used nowadays to the value of 1.5 to 2%, and reducing the number of the sorting stages save as much as 50% of the pumping energy costs. Further, increasing the consistency in the fine screening considerably reduces the filtering surface required by the thickeners situated further in the chain.

The invention is described above and in the drawing only by way of example, and it is in no way restricted thereto. What is essential is that the entire defibering process of the recycled paper is realized in a short and simple manner so that the conventional coarse-screening stage and the preceding separate cleaning stage which consume a lot of energy and require expensive investments can be avoided.

## Claims

1. A method for processing recycled paper to a pulp to be reused, in which method the recycled paper is defibered into a pulp in a pulper, contaminants are removed from the pulp, and the pulp is coarse-screened and fine-screened, wherein the recycled paper is defibered and coarse-screened in a pulper comprising a fixed sorter part where coarse contaminants and non-degradable fibre bundles are separated from the pulp so that a coarse-screened pulp can be obtained from the pulpering, and that the pulp which has passed the sorting is taken after this without any further coarse-screening step to LC-cleaning where sand is removed from it, and after that the pulp is taken to fine screening where the rest of the contaminants are removed from it.

2. A method according to claim 1,
**characterized** in that the reject obtained during the defibering and coarse screening is taken to re-defibering and re-sorting, from where the separated and sorted pulp is taken further to LC-cleaning and fine screening.

3. A method according to claim 2,
**characterized** in that the reject obtained from the re-defibering and re-sorting is taken further to drum sorting, whereupon the reject is washed and the fibre separated from it is returned to the pulper with the washing water.

4. A method according to any one of the preceding claims, **characterized** in that the fibrous reject remaining in the fine screening is taken further to additional sorting, from where the pulp which has passed the sorting is returned back to the fine screening.

5. A method according to any one of the preceding claims, **characterized** in that the pulp from the defibering stage and the re-defibering stage is taken to an intermediate tank, from where it is taken further to LC-cleaning and fine screening.

6. A method according to any one of the preceding claims, **characterized** in that the pulp is taken to LC-cleaning in the consistency of 1 to 2%.

## Patentansprüche

1. Verfahren zur Aufbereitung von Altpapier zu einer wiederzuverwertenden Pulpe, bei dem das Altpapier in einem Pulper zu einer Pulpe zerfasert wird, Verunreinigungen aus der Pulpe entfernt werden und die Pulpe grob- und feinsortiert wird, und bei dem das Altpapier in einem Pulper zerfasert und grobsortiert wird, der einen festen Sortiererteil, in dem grobe Verunreinigungen und nichtabbaubare Faserbüschel von der Pulpe getrennt werden, umfaßt, so daß eine grobsortierte Pulpe aus der Stoffauflösung erhalten werden kann, und bei dem die Pulpe, die die Sortierung durchlaufen hat, anschließend ohne jeglichen weiteren Grobsortierschritt der LC-Reinigung zum Entfernen von Sand und danach der Feinsortierung zugeführt wird, wo die restlichen Verunreinigungen entfernt werden.

2. Verfahren nach Anspruch 1, dadurch gekennzeichnet, daß der Rückstand, der beim Zerfasern und Grobsortieren erhalten wurde, der Wiederzerfaserung und Wiedersortierung zugeführt wird, von wo aus die getrennte und sortierte Pulpe weiter der LC-Reinigung und Feinsortierung zugeführt wird.

3. Verfahren nach Anspruch 2, dadurch gekennzeichnet, daß der aus der Wiederzerfaserung und Wiedersortierung erhaltene Rückstand weiter der Trommelsortierung zugeführt wird, wonach der Rückstand gewaschen und die davon getrennten Fasern zusammen mit dem Waschwasser zum Pulper zurückgeführt werden.

4. Verfahren nach einem der vorangehenden Ansprüche, dadurch gekennzeichnet, daß der in der Feinsortierung zurückbleibende faserige Rückstand weiter einer zusätzlichen Sortierung zugeführt wird, von wo aus die Pulpe, die die Sortierung durchlaufen hat, zur Feinsortierung zurückgeführt wird.

5. Verfahren nach einem der vorangehenden Ansprüche, dadurch gekennzeichnet, daß die von der Zerfaserungsstufe und der Wiederzerfaserungsstufe kommende Pulpe einem Zwischentank zugeführt und von dort aus weiter der LC-Reinigung und der Feinsortierung zugeführt wird.

6. Verfahren nach einem der vorangehenden Ansprüche, dadurch gekennzeichnet, daß die Pulpe mit einer Stoffdichte von 1 bis 2 % der LC-Reinigung zugeführt wird.

## Revendications

1. Procédé pour transformer du papier recyclé en pâte à réutiliser, procédé dans lequel le papier recyclé est défibré sous forme de pâte dans un désintégrateur, des contaminants sont enlevés de la pâte, et la pâte est grossièrement tamisée et finement tamisée, dans lequel le papier recyclé est défibré et tamisé grossièrement dans un désintégrateur comportant une partie formant trieuse fixe où des contaminants grossiers et des faisceaux de fibres non-dégradables sont séparés de la pâte de sorte qu'une pâte grossièrement tamisée peut être obtenue à partir de la désintégration, et que la pâte qui a passé le tri est envoyée après ceci sans aucune étape supplémentaire de tamisage grossier vers un nettoyage LC où le sable est enlevé de celle-ci et après quoi la pâte est envoyée vers un tamisage fin où le reste des contaminants est enlevé de celle-ci.

2. Procédé selon la revendication 1, caractérisé en ce que le rejet obtenu pendant le défibrage et le tamisage grossier est envoyé vers un nouveau défibrage et un nouveau tri, à partir desquels la pâte séparée et triée est envoyée en outre vers un nettoyage LC et un tamisage fin.

3. Procédé selon la revendication 2, caractérisé en ce que le rejet obtenu à partir du nouveau défibrage et du nouveau tri est envoyé en outre vers un tri par tambour, après quoi le rejet est lavé et les fibres séparées de celui-ci sont renvoyées vers le désintégrateur avec l'eau de lavage.

4. Procédé selon l'une quelconque des revendications précédentes, caractérisé en ce que le rejet fibreux restant dans le tamisage fin est en outre envoyé vers un tri supplémentaire, à partir duquel la pâte qui a passé le tri est renvoyée vers le tamisage fin.

5. Procédé selon l'une quelconque des revendications précédentes, caractérisé en ce que la pâte provenant de l'étage de défibrage et de l'étage de nouveau défibrage est envoyée vers un réservoir intermédiaire, à partir duquel elle est envoyée en outre vers un nettoyage LC et un tamisage fin.

6. Procédé selon l'une quelconque des revendications précédentes, caractérisé en ce que la pâte est envoyée vers un nettoyage LC avec une consistance de 1 à 2 %.
